# EUROPEAN PATENT SPECIFICATION

(11) **EP 4 153 516 B1**
(45) Date of publication and mention of the grant of the patent: **25.12.2024**
(21) Application number: 21727435.6
(22) Date of filing: 18.05.2021
(51) Int. Cl.: B65G 49/04

(54) **DEVICE AND SYSTEM FOR TRANSPORTING A PLURALITY OF PARTS TO BE TREATED THROUGH AN APPARATUS FOR WET-CHEMICAL TREATMENT**
VORRICHTUNG UND SYSTEM ZUM TRANSPORT MEHRERER ZU BEHANDELNDER TEILE DURCH EINE VORRICHTUNG ZUR NASSCHEMISCHEN BEHANDLUNG
DISPOSITIF ET SYSTÈME POUR LE TRANSPORT D'UNE PLURALITÉ DE PIÈCES DEVANT ÊTRE TRAITÉES PAR L'INTERMÉDIAIRE D'UN APPAREIL POUR LE TRAITEMENT CHIMIQUE PAR VOIE HUMIDE

(30) Priority: 18.05.2020 EP 20175202
(43) Date of publication of application: 29.03.2023
(73) Proprietor: Atotech Deutschland GmbH & Co. KG, 10553 Berlin (DE)
(72) Inventor: SEUß, Steffen, 10553 Berlin (DE); THOMAS, Christian, 10553 Berlin (DE); UNTERLUGGAUER, Josef, 10553 Berlin (DE); LORENZ, Olaf, 10553 Berlin (DE); BUTTER, Stefan, 10553 Berlin (DE); ZASCHKA, Patrick, 10553 Berlin (DE)
(74) Representative: MKS IP Association
(86) International application number: PCT/EP2021/063188
(87) International publication number: WO 2021/233938

(56) References cited:
- EP-A2- 0 950 730
- DE-B1- 2 844 244

## Description

### Technical Field

The invention relates to a device for transporting a plurality of parts to be treated through an apparatus for wet-chemical treatment, the device comprising:
a transporter, comprising at least one runner for supporting the transporter for movement along at least one track in a first direction,
wherein at least part of the transporter is located next to the runners, seen in a second direction transverse to the first direction, and
wherein this part extends from a level below the runners to a level above the runners in a third direction transverse to the first and second directions;
a container having an interior for accommodating the plurality of parts; and
a frame, at least indirectly connecting the container to the transporter to allow the transporter to carry the container at a level below the runners, wherein the frame comprises a respective frame part at at least one of opposite axial ends of the container with respect to an axis of the container,
wherein the container is liquid-pervious between the axial ends to allow liquid to flood the interior when the container is immersed in the liquid.

The invention also relates to a system for transporting a plurality of parts to be treated through an apparatus for wet-chemical treatment, comprising:
a frame supporting at least one track; and
at least one device for transporting a plurality of parts to be treated through an apparatus for wet-chemical treatment.

The invention also relates to an apparatus for wet-chemical treatment of a plurality of parts, including at least one tank for forming a bath, and a system for transporting the plurality of parts through the apparatus.

The invention also relates to a method of transporting a plurality of parts to be treated through an apparatus for wet-chemical treatment, wherein the plurality of parts are accommodated in a container of a device for transporting a plurality of parts to be treated and the device is moved on tracks through the apparatus.

### Background Art

GB 873,618 discloses a return-type liquid treating machine that has a generally U-shaped row of tanks of various sizes and load and unload stations in an area between the ends of the row. An overhead conveyor rail of continuous loop shape is mounted on a main frame consisting of upright posts and cross-beams, and supports work carriers during their travel through the machine. A plurality of work-supporting assemblies are supported on the overhead rail for carrying the work into and out of the tanks through a pre-determined treatment cycle. The assembly consists of an upright supporting frame which is of a substantially inverted U-shape having upright parallel leg portions connected at their upper ends by a horizontal base portion. A pair of brackets are pivotally mounted on the base portion and carry pairs of rollers which ride on the overhead rail. In use of the machine, the work-supporting assemblies are suspended on the overhead rail and are moved between successive stations in the machine by an overhead pusher or transfer mechanism of a well-known type. Indeed, this type of indexing movement is known in the field of barrel platers. Seen in the direction of the axis of rotation of the rollers, only the overhead rail is located between rollers. There is a relatively large mass suspended like a pendulum from the single overhead rail. Due to the cross-beams and upright posts, which form gantries, the entire work-supporting assembly must remain below the level of the rollers. This means that the cross-beams must be relatively high, namely high enough to accommodate the pusher mechanism, the overhead rail and an entire work-supporting assembly. In addition, the known work-supporting assembly must use a supporting frame of a specific shape, namely the inverted U-shape.

DE 24 09 481 A1 discloses an apparatus for dip-treatment of workpieces in aggressive liquids with troughs containing the liquid arranged next to each other, in which a container receiving the workpieces, carried by a hanger is immersed. A carriageway is arranged along the troughs arranged in a row next to each other, and a carriage is displaceable on this carriageway. The carriage is provided with a lifting and carrying device and the hanger for replaceably receiving a container or the like. A fork and a servomotor for pivoting the fork are journalled on the carriage and a bearing shell for a hanger for receiving a basket or for a barrel is arranged at the free end of the limbs of the fork. A drive transmission mechanism to a barrel journalled in the bearing shell of the fork may be arranged on the fork. This type of apparatus, using a lift arm, is conventionally distinguished from the type comprising elevator-type barrel carriers. Because the carriageway is situated next to the baths and must be wide enough to accommodate the entire carriage, the apparatus is relatively wide. Pre-assembly of segments before transport to the site at which the machine is to be used is therefore impractical. The pre-assembled segments would be too wide for intermodal containers (standardised shipping containers).

JP 2017-122259 A discloses an oscillating barrel transfer device including an oscillating barrel, a holding frame for holding the oscillating barrel and an elevating mechanism for raising and lowering the oscillating barrel together with the holding frame. The oscillating barrel includes a pair of end walls provided apart from each other along a cylinder axis and a cylindrical peripheral wall provided so as to surround the outer peripheral portion of the end wall so as to extend between the pair of end walls. The oscillating barrel oscillates around the cylinder axis. The holding frame has a pair of supports provided so as to sandwich both end walls of the oscillating barrel from outside thereof. One support is provided with a gear train in which a plurality of gears mesh with each other in the height direction. The elevating mechanism raises and lowers the holding frame above a processing tank, for example a plating tank, so that the oscillating barrel held by the holding frame is transferred to processing liquid stored in the processing tank. A specific configuration adopted for the lifting mechanism is that a lifting guide rail is provided so as to be laterally movable with respect to a rail frame erected close to the side of the processing tank. A hanger member for suspending the holding frame with respect to the rail is provided so as to be able to move up and down, and the holding frame is held by the hanger member. The lateral movement of the elevating guide rail may employ a towing structure such as a chain transmission or a rope transmission, or a self-propelled structure that meshes with a chain or a rack rail provided on the rail frame. The barrel axis extends in a direction transverse to the direction of movement of the lifting guide rail. For a barrel of reasonable size, the bath must therefore be relatively wide and space must be provided adjacent the bath for the rail frame and elevating guide rail. The assembly comprising the rail frame, the elevating guide rail and the hanger member consequently has a relatively large width. This makes pre-assembly and shipping in an intermodal container impractical. Furthermore, if the treatment in the bath is an electrochemical treatment, electrodes in the bath should also extend in a direction transverse to the direction of movement, in order to establish a relatively uniform electric field directed through the peripheral wall of the barrel. Even if several treatment stations are defined in the same bath, the electrodes require the barrel to be lifted and lowered as the barrel is moved from station to station.

US 4,081,346 discloses an apparatus including a transportable work carrier comprising a generally U-shaped framework including a pair of spaced apart hanger arms between which a treating barrel is supported for oscillation about a substantially horizontal axis. A pick-up arm is securely fastened to one of the hanger arms or supports and a second pick-up arm is securely fastened to the outer face of the other hanger support. The treating barrel is comprised of a pair of spaced-apart substantially circular end members, which are each provided with a circular gear integrally moulded therewith. A foraminous body panel extends between and is fused to the inner surfaces of the end members, defining in combination therewith a generally cylindrical treating chamber. Conveyance of the work carrier between several treating stations and the lifting and lowering thereof so as to clear the edges of adjacent treating tanks is performed by a carriage mounted for translator movement on a pair of longitudinally extending rails supported from a framework comprising side members affixed to upright columns and vertical members secured to an upper crossbeam. The carriage includes an upper platform to which a vertical guide column is secured on which a roller carriage is guidably mounted for vertical movement to and from a lowered position to a raised position. A transversely extending lift member is affixed to the roller carriage and includes an engaging member at each end thereof for engaging inwardly projecting horns on the pick-up arms of the work carrier. Reversible drive motors are also mounted on the carriage for effecting up and down movement of the left member and translator movement of the carriage along the rails in appropriate alignment above the several treating stations. Normally, the apparatus is automatically controlled through a computerised control system relying on various cam plates and limit switches at a section beneath one of the rails, which are adapted to be tripped in response to movement of the carriage to effect a prescribed operating sequence. Power is supplied to the motor mechanisms through a cable. The barrel axis extends in a direction transverse to the direction of movement. For a barrel of reasonable size, this means that the upright columns must be spaced relatively far apart. It is therefore impractical to pre-assemble sections of the framework on which the rails are provided for transport to a location at which the apparatus is to be operated. Furthermore, if the treatment in the bath is an electrochemical treatment, electrodes in the tank should also extend in a direction transverse to the direction of movement, in order to establish a relatively uniform electric field directed through the body panel of the barrel. Even if several treatment stations are defined in the same tank, the electrodes require the barrel to be lifted and lowered as the barrel is moved from station to station.

EP 0 950 730 A2 discloses a device according to the preamble of claim 1 and concerns the plating and finishing of metal pieces immersed in a bath, in particular small metal items, using a system for treatment. The entire system (transporter, frame and container, corresponding to tumbler assembly, frame and tumbler) is raised and lowered by a hooking means of an overhead travelling crane that hooks behind hook-like parts of the barrel-supporting frame.

DE 28 44 244 B1 relates to a device according to the preamble of claim 1 for transporting and dropping off a workpiece carrier, in particular in apparatus for galvanic treatment of the workpieces in the workpiece carrier. The device comprises a transporter drivable or towable along rails, vertical guides connected to the transporter, workpiece carrier receivers guided along the vertical guides and a monitoring device. The vertical guides are stationary parts of the frame and there are no parts of which movement through the transporter is guided.

### Summary of Invention

It is an object of the invention to provide a device, system, apparatus and method of the types mentioned above in the opening paragraphs that allow for the system and thus a processing line of the apparatus, to be built up out of segments that are relatively compact in terms of segment width and, at least when the device is not present, segment height.

This object is achieved according to a first aspect by the device of the invention, according to claim 1.

According to the invention, it is comprised a mechanism for guiding movement of at least one of the frame and the container in the third direction (z) relative to the transporter, wherein the mechanism comprises at least one elongate part of the frame and at least one respective bearing for guiding movement of the elongate part of the frame through or next to the transporter.

The device, in particular the container, may be configured for transporting loose parts to be treated. The container may be a basket, a barrel, or a rack construction, stationary or movable with respect to the frame connecting the container to the transporter. In case of a rack construction, the part to be treated will be attached to the rack construction e.g. to a hook of the rack construction. Wet-chemical treatment may in particular include at least one of chemical or electrolytic metal deposition, chemical or electrolytic etching and chemical or electrolytic cleaning. Specifically contemplated examples of electrolytic metal deposition include galvanic deposition of metal onto the parts to be treated.

The transporter includes at least one runner for supporting and guiding movement of the transporter along at least one track in a first direction. The runners may comprise one or more shoes arranged for sliding movement on a rail or one or more wheels or rollers, journalled for rotation and placement on a track. Such a track may be formed by part of a structure providing a flat surface on which the wheels can be placed. The first direction will generally be in a predominantly horizontal plane and is defined by the orientation and structure of the runners. Thus, in the case of wheels, the first direction will be defined by the orientation of the axes of rotation of the wheels. In the case of shoes or sliders, the orientation of their longitudinal axes will define the first direction. Consequently, the first direction is recognisable even when the device is not positioned on the one or more tracks.

At least part of the transporter is located next to the runners, seen in a second direction transverse to the first direction. The second direction will be in the plane of movement and generally correspond to a lateral direction with respect to the first direction. Where there are two sets of runners for guiding and supporting the transporter on respective parallel tracks, the part of the transporter located next to the runners will generally be located between a first of the sets and a second of the sets. This part extends from a level below the runners to a level above the runners in a third direction transverse to the first and second directions. The third direction generally corresponds to an upright axis of the device when supported on the track or tracks. Thus, the device is not completely positioned below the level of the runners, but extends to above the level of the runners. The tracks can thus be at a lower level. The frame connecting the container to the transporter allows the transporter to carry the container at a level below the first and second runners, at least when positioned at a processing station of the apparatus. The tracks can therefore be above the bath containing the liquid into which the container is to be immersed. This allows a stationary frame carrying the tracks to be relatively narrow. The tracks need not be positioned adjacent the baths. The frame connecting the container to the transporter comprises a respective frame part at at least one of opposite axial ends of the container with respect to an axis of the container. The container is thus carried by the frame at one axial end or at both axial ends, but only at axial ends. The locations of the frame part or parts therefore define the orientation of the container axis. The container is liquid-pervious between the axial ends to allow liquid to flood the interior when the container is immersed in the liquid. Because the container is carried by the frame only at one or both axial ends, the flow of liquid into the container is essentially unobstructed. Where the parts are treated electrochemically, the frame parts do not appreciably disrupt the electric field.

Because the axis of the container extends in a direction transverse to the second and third directions, the container axis is approximately or exactly parallel to the first direction, the direction of movement of the transporter. Generally, the radial dimension of the container will be smaller than the axial dimension, so that the baths containing the processing liquid can be relatively narrow. In any case, the frame part or frame parts will not add to the width of the container. Instead, they will be positioned in front of and/or behind the container in the (first) direction of movement of the device along the track or tracks. Where electrodes are arranged at a processing station, these will be located on one or both sides of the container, seen in the second direction. The electric field lines will thus be transverse to the container axis and relatively uninterrupted by parts of the frame connecting the container to the transporter. This will result in a more uniform field. Furthermore, there may be several stations defined in one bath, which stations are not separated by electrodes extending across the path of the container. Thus, the container can remain immersed in the liquid when the container is moved between stations within one and the same bath. This is of use if there are several devices moving through the apparatus and treatment is synchronised in the sense that fixed units of treatment time are defined. The container can be advanced in the same bath without needing to be raised and lowered to clear an electrode in the bath.

In an embodiment, the frame is inseparable from the transporter.

As a consequence, the transporter need not move back and forth along the tracks to pick up and drop off the container. The container will generally also be inseparable from the frame, so that there is no need for any structures to receive the frame and container at each of multiple processing stations in the apparatus. Where the apparatus or the stationary part of a system for transporting the parts to be treated through the apparatus is made up of pre-assembled segments, these segments can be lighter in weight. The segments also comprise fewer parts. This also facilitates pre-assembly of segments prior to shipping of the pre-assembled segments in intermodal containers. If the container of the device is movable (e.g. rotatable and/or translatable) with respect to the frame, a drive for moving the container may still be located at one or more processing stations. Alternatively, such a drive may also be comprised in the device for transporting the parts to be treated.

In an embodiment, the runners comprise at least one first runner and at least one second runner,
wherein the first runners and second runners are arranged for movingly supporting the transporter along first tracks and second tracks, respectively, and
wherein the first runners are positioned at a distance in the second direction to the second runners.

In this embodiment, the device for transporting the parts to be treated may extend between the first runners and the second runners from a level below the runners to a level above the runners in the third direction. Thus, the weight of the device is distributed relatively evenly over the runners and bears on them in only one direction. The device can comprise relatively many components.

In an embodiment, the runners comprise wheels, rotatably journalled on axles.

The wheels include at least supporting wheels, of which the axles will generally be oriented with their axis of rotation parallel to the second direction. The wheels may be toothed wheels configured to run on tracks in the form of racks. Alternatively, the wheels may be configured to run on tracks with flat surfaces. Such wheels may be provided with solid or pneumatic tyres and/or surface coverings to improve adherence to the tracks. The wheels may include at least one guide wheel, of which the axle has an axis of rotation having an orientation transverse to the first and second direction.

An embodiment of the device further comprises a drive for driving the device in the first direction.

The drive may be electromagnetic, pneumatic, hydraulic, for example, depending on the type of runner. In this embodiment, the stationary part of the system for transporting the parts to be treated need not comprise a device for moving the transporter. This again helps keep the weight and dimensions of the stationary part low, facilitating pre-assembly of stationary segments of the system or of segments of the processing apparatus. Furthermore, assembly of the segments is simplified, because there need be no mechanism for moving the device for transporting the parts to be treated from segment to segment. The segments can simply be placed in abutting relationship.

In an embodiment in which the runners comprise wheels, rotatably journalled on axles, and the device further comprises a drive for driving the device in the first direction, the drive comprises a motor for driving at least one of the axles.

This type of drive requires no stationary components, as would be the case for linear motors, for example. The motor may be an electric motor, so that the device need only carry a battery or be supplied with electric power through a live rail, for example. An electric motor is easy to control and power supply is easier than would be the case for pneumatic or hydraulic motors.

An embodiment of the device comprises at least one drive and at least one controller for controlling operation of at least one of the at least one drives.

There may be one controller per drive or one controller arranged to control multiple drives. Alternatively, an overall controller may co-ordinate the operation of individual drive controllers. The term controller is used here to denote a control system, not necessarily a microcontroller. The controller or controllers may thus comprise a programmed computer. In this embodiment, the device can operate autonomously or semi-autonomously.

In a particular example of this embodiment, therefore, the device comprises a data storage device for storing instructions defining a series of operations effected by operating at least one of the at least one drives at at least one processing station in the apparatus for wet-chemical treatment, wherein at least one of the at least one controllers is arranged to access the data storage device to obtain and give effect to the instructions.

In an example of any of the above-mentioned embodiments in which the device comprises at least one drive and at least one controller for controlling operation of at least one of the at least one drives, the device further comprises at least one communication interface for obtaining instructions to at least one of the at least one controllers, defining operations effected by operating at least one of the at least one drives.

Thus, a certain amount or complete central control of the device is made possible. Where multiple devices are deployed in the apparatus simultaneously, collision avoidance is facilitated. The same or a similar communication interface can be used to send error messages from the device. The operations referred to may include movement of the device to a next processing station and/or operations effected whilst the device is in position at one of the processing stations of the apparatus.

In an embodiment, the device further comprises at least one contact shoe assembly for contacting a live rail extending along at least one of the tracks.

The power supply can be for powering drives of the device or for processes such as electrolytic processing of the parts to be treated. The device need not carry batteries in this embodiment.

A particular example of this embodiment comprises at least a second contact shoe assembly for contacting a second live rail extending along at least one of the tracks.

This allows for electric power to be supplied at different voltages and/or currents, e.g. for use in electrolytic processes and for use by drives and/or controllers of the device. One or both of the power supplies may be intermittent, e.g. because the live rail is not continuous or not continuously in contact with the associated shoe assembly. This will not affect the supply of electrical power via the other shoe assembly.

According to the invention, the device comprises a mechanism for guiding movement of at least one of the frame and the container in the third direction relative to the transporter.

In other words, the container can be raised and lowered with respect to the transporter, e.g. to immerse the container into a bath in the processing apparatus. The transporter can remain at one level. The tracks can thus also be relatively simple, e.g. be arranged in one plane. This allows for the provision of standard segments. It is noted that the actuator for raising and/or controlled lowering of the container may be a stationary actuator arranged to engage the device only at a particular position along the tracks. Alternatively, the actuator may also be comprised in the device and thus move with the device.

Thus, a particular example of this embodiment comprises a drive for driving the movement in at least one of the third direction and a direction opposite to the third direction.

The drive may comprise a motor, e.g. a hydraulic, pneumatic or electric motor. The drive may comprise or drive a ball screw, hoist or the like.

In a particular example, the drive is electrically powered.

This embodiment is easy to control and power supply is easier than would be the case for pneumatic or hydraulic motors.

According to the invention, the device comprises a mechanism for guiding movement of at least one of the frame and the container in the third direction relative to the transporter, the mechanism comprises at least one elongate part of the frame and at least one respective bearing for guiding movement of the elongate part of the frame through or next to the transporter.

The frame can be relatively simple and robust, capable of withstanding aggressive processing liquids when immersed therein. At least a section of the frame may be located next to the runners, seen in the second direction, so that the elongate part need not be located completely below the transporter. Instead, the elongate part can move through or next to the transporter, the device being of the elevator type, rather than the lift-arm type.

In an embodiment, the frame is provided with at least one first electrical contact at a distal position with respect to the container, seen in the third direction, and with a conductor from the first electrical contact to at least one electrode arranged within the container, the first electrical contact is positioned to move towards the transporter when the container moves away from the transporter, and the transporter is provided with a second electrical contact, arranged to contact the first electrical contact at a limit of movement of the container away from the transporter.

This is a relatively simple way of ensuring that power is supplied to the electrode only when the container is in a lowered position, e.g. immersed in an electrolyte. Power electronics may be provided to prevent arcing. Otherwise, the first and second electrical contacts function as contacts of a switch.

In an embodiment, the container is a barrel journalled to the frame for rotation about the axis.

This provides for better contact between the parts to be treated and the processing liquid when the container is immersed in the processing liquid. The parts to be treated can be accommodated in the container as loose parts. A rack, a rack construction, or the like for keeping them separated is not required in this case.

An example of this embodiment further comprises at least one transmission mechanism, e.g. a gear train, for transmitting rotary movement from a barrel drive to the container.

The barrel drive need not be immersed in the processing liquid in this embodiment. The transmission mechanism keeps the barrel drive separate from the barrel, in particular in the third direction. The gear train is relatively easy to implement using gears made of material suitable for exposure to aggressive processing liquids. However, a transmission mechanism using a chain or belt is also conceivable.

A particular version of this example further comprises the barrel drive.

This means that the stationary parts of the system for transporting the parts to be treated through the apparatus for wet-chemical processing need not comprise barrel drives at the various processing stations. These stationary parts or segments can therefore be more compact and lighter. Again, pre-assembly of segments of the system or apparatus segments for shipping in assembled state to a site at which the apparatus is to be deployed is facilitated.

The barrel drive may be electrically powered.

This embodiment is easy to control and power supply is easier than would be the case for pneumatic or hydraulic motors
In a variant of this embodiment, wherein the device further comprises a drive for driving the device in the first direction and/or a mechanism for guiding movement of at least one of the frame and the container in the third direction relative to the transporter and a drive for driving the movement in at least one of the third direction and a direction opposite to the third direction, the barrel drive is independent of the other drives.

This means that one or more drives can be in motion without the others being in motion. The drives may still operate under the control of one single controller. In this embodiment, it is, for example, possible to rotate the barrel whilst keeping the barrel at one level in the third direction, for example during movement between processing stations.

In an embodiment, the container is a barrel journalled to the frame for rotation about the axis, wherein the device further comprises at least one transmission mechanism, e.g. a gear train, for transmitting rotary movement from a barrel drive to the container and the device further comprises the barrel drive, the barrel drive is mounted on the frame.

The barrel drive can thus move up and down with the frame and therefore remain coupled to the barrel. This embodiment is relatively simple to implement. The barrel will generally only be rotatable with respect to the frame. The transmission mechanism between the barrel drive and the barrel is relatively simple, because the transmission mechanism need not be adapted to allow for translatory movement of the barrel with respect to the frame. The power supply to the drive may be via a flexible cable carrier, for example.

According to another aspect of the invention, there is provided a system according to claim 11.

The system frame may in particular be a frame for stationary placement in the apparatus for wet-chemical processing. As mentioned, the frame may be built up out of segments. These may be pre-assembled, shipped to a site at which the apparatus is to be operated and joined together there to form a process line.

In an embodiment of the system, each track is provided by an elongate bar, wherein the frame comprises at least one upright post, each arranged to support at least one of the bars, and wherein connections between the bars and the upright posts are completely below a level of a top of the bar.

Thus, the tracks can substantially define the height of the stationary part of the system, with the device moving on top when in place. The overall height without the moving device can be relatively low.

An embodiment of the system comprises a pair of parallel tracks, between which a space is defined for movement of the at least one device for transporting the plurality of parts to be treated, wherein the system is free of parts above the space in the absence of the at least one device for transporting the plurality of parts to be treated.

The or each device for transporting the plurality of parts to be treated can thus extend downwards at least partly into or through the space. The or each device for transporting the plurality of parts to be treated can also be relatively tall, yet still move freely on the tracks.

An embodiment of the system comprises at least one live rail for supplying electrical power to the at least one device for transporting a plurality of parts to be treated through an apparatus for wet-chemical treatment
The power supply can be for powering drives of the device for transporting a plurality of parts to be treated. The power supply can also be for use in processes such as electrolytic processing of the parts to be treated. The device need not carry batteries in this embodiment.

A variant of this embodiment comprises at least two live rails and a system for supplying electrical power at a different voltage to a first of the live rails than to a second of the live rails.

This allows for electric power to be supplied at different voltages and/or currents, e.g. for use in electrolytic processes and for use by drives and/or controllers of the device. One or both of the power supplies may be intermittent, e.g. because the live rail is not continuous or not continuously in contact with the associated shoe assembly on the device for transporting a plurality of parts to be treated. This will not affect the supply of electrical power to the other shoe assembly associated with the other live rail.

According to another aspect of the invention, there is provided an apparatus according to claim 13.

In an embodiment, the apparatus comprises at least one processing station for electrolytically treating the parts to be treated.

In a particular example of this embodiment, the processing station includes at least one tank for accommodating an electrolyte and at least one electrode arranged in the tank, wherein each of the electrodes extends at an angle of less than 45° to the at least one track.

The resulting electric field and current flow is oriented essentially in the second direction, i.e. in a transverse direction to the container axis. The frame parts at the axial ends do not cause appreciable interruptions. Where multiple electrodes are provided, these may be positioned on either side of a central axis of the tank extending in the first direction. The electrodes may be at a distance to each other in the second direction. They thus leave a path free for the container when immersed in the electrolyte.

According to another aspect of the invention, there is provided a method according to claim 14.

The method may comprise the use of a system according to the invention, just as the system and device according to the invention are suitable for carrying out the method of the invention.

In an embodiment of the method, each of the devices is provided with:
at least one drive for driving at least one of the device and a component of the device; and
at least one controller for controlling at least one of the drives.

An example of this embodiment comprises programming the controller with logic defining a series of operations for autonomous execution by the device. In this embodiment, the device can operate partly or completely autonomously. The device need only respond to sensor signals and/or timing signals.

An example of any embodiment of the method in which each of the devices is provided with at least one drive for driving at least one of the device and a component of the device and at least one controller for controlling at least one of the drives further comprises providing instructions to the controller during movement of the device through the apparatus.

The instructions are provided from a source external to the device, e.g. another of the devices or a central control system. This allows for collision avoidance or better synchronisation of the operation of multiple devices for transporting a plurality of parts to be treated through the apparatus, for example.

### Brief Description of Drawings

The invention will be explained in further detail with reference to the accompanying drawings, in which:
- Fig. 1: is a perspective view of parts of a segment of a treatment line of an apparatus for wet-chemical treatment of loose parts, shown in combination with four product carriers arranged to move the parts through the apparatus;
- Fig. 2: is a perspective view of the segment with only one product carrier present;
- Fig. 3: is a top view of the segment and product carrier of Fig. 2, with certain parts of processing station removed;
- Fig. 4: is a side view of the segment and product carriers of Figs. 2 and 3 with the same parts of the processing stations removed.
- Fig. 5: is a top view of the segment in the configuration of Figs. 2-4 without the product carrier;
- Fig. 6: is a perspective view of the product carrier;

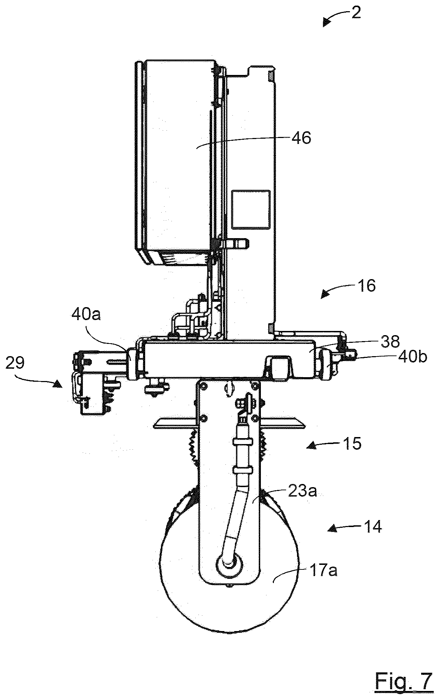

- Fig. 7: is a first side view of the product carrier;

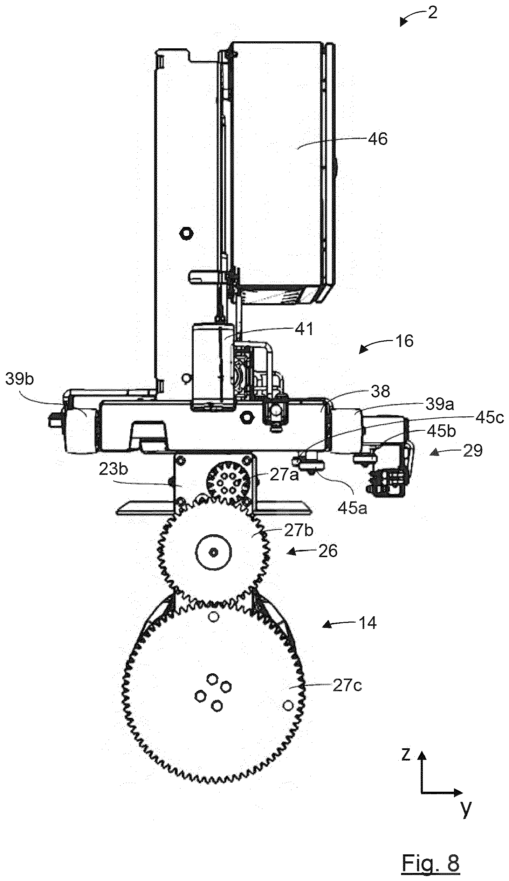

- Fig. 8: is a second side view of the product carrier;

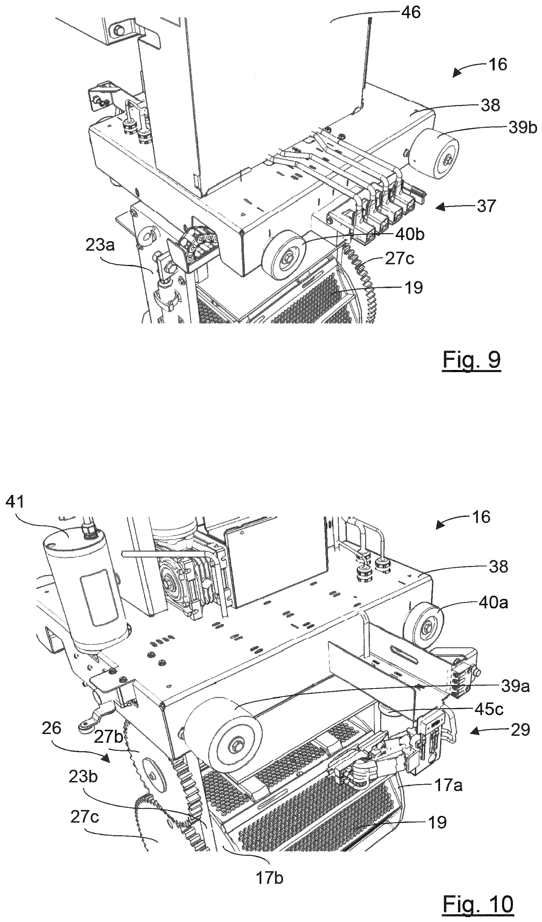

- Fig. 9: is a first detailed perspective view of part of the product carrier;
- Fig. 10: is a second detailed perspective view of part of the product carrier;
- Fig. 11: is a third detailed perspective view of part of the product carrier;
- Fig. 12: is a fourth detailed perspective view of part of the product carrier, with certain housing parts removed;
- Fig. 13: is a front view of part of the product carrier with certain housing parts removed;
- Fig. 14: is a detailed view of a mechanism for guiding movement of a frame for connecting a barrel of the product carrier to a transporter com-prised in the product carrier;
- Fig. 15: is a detailed view of the transporter with certain parts removed to show supporting wheels of the transporter;
- Fig. 16: is a perspective view of the frame and the barrel;
- Fig. 17: is a front view of the barrel and part of the frame with a peripheral wall of the barrel removed; and
- Fig. 18: is a schematic block diagram illustrating components for controlling the operation of the product carrier.

### Description of Embodiments

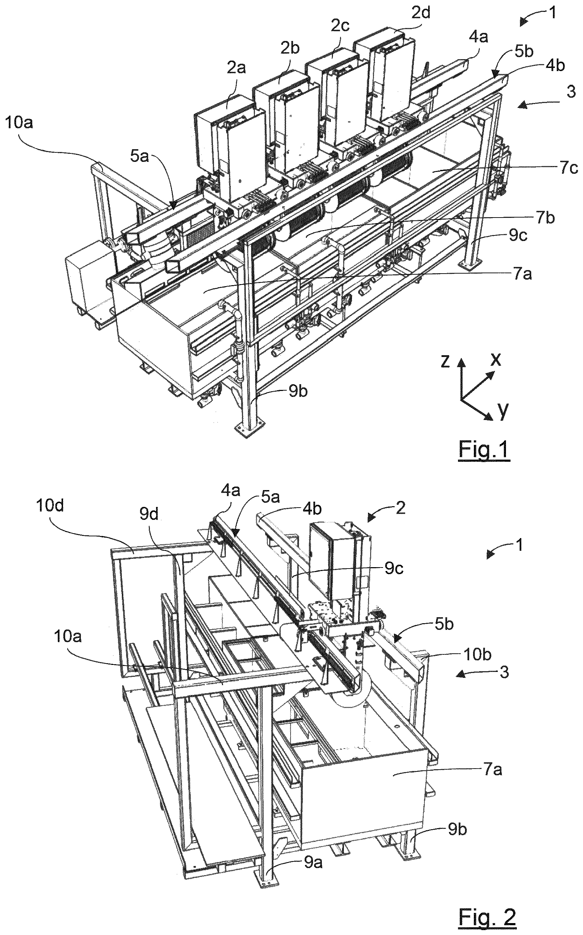

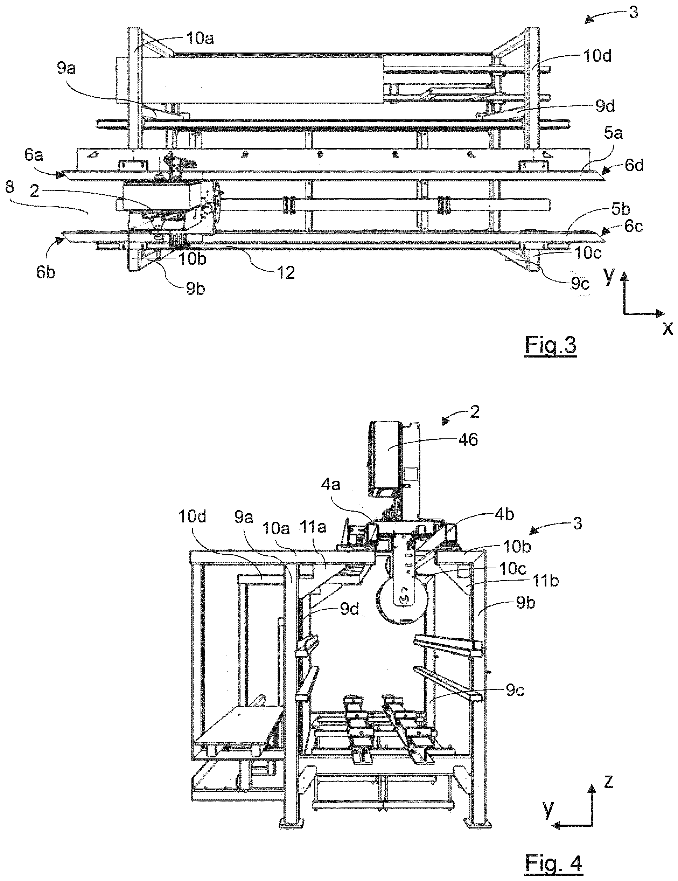

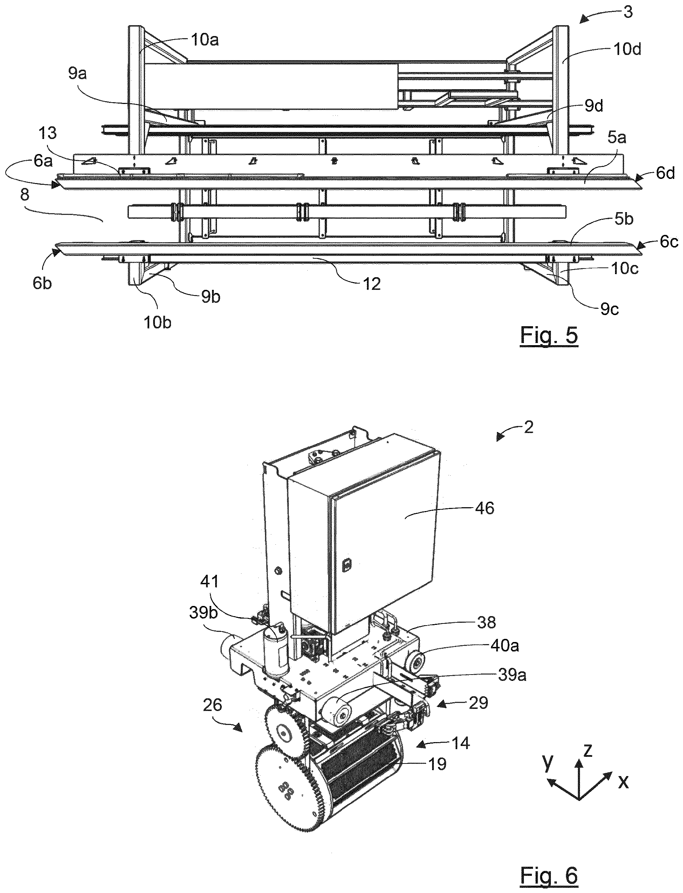

An apparatus for wet-chemical treatment of loose parts (not shown) is built up out of apparatus segments 1, one of which is shown (Figs. 1 and 2). Pumps, pipes and cabling have been removed for clarity. The apparatus comprises a system for transporting the parts to be treated through the apparatus. This system is also built up out of stationary segments and further includes a plurality of product carriers 2a-d. Within each segment, the system comprises a system frame 3 and a pair of elongate bars 4a,b defining tracks 5a,b along and on which the product carriers 2a-d are arranged to move. In the illustrated embodiment, the bars 4a,b are extruded profiles having a quadrilateral cross-section. In other embodiments, rails may be used instead of bars 4a,b. The quadrilateral shape allows for side surfaces of the bars 4a,b to perform a guidance function, as will be explained. The bars 4a,b have end faces 6a-d (Figs. 3 and 5) at an angle to their longitudinal axes. This allows for smoother transitions between the apparatus segments 1. The angle may between 20^{o} and 70^{o}, e.g. between 40^{o} and 50^{o}, for example.

In the illustrated example, the apparatus segment 1 further comprises three tanks 7a-c for accommodating liquid in which the parts to be treated are im-mersible. One or more processing stations are defined in each tank 7a-c. In a method of operating the apparatus, processing is synchronised, in that a fixed unit of processing time is defined. Each product carrier 2 remains at a processing station for one unit of processing time or a multiple of the unit of processing time. An effect of this synchronised method of processing is that there is less risk of collision between the product carriers 2a-d. It is, however, noted that product carriers 2a-d may skip processing stations or even tanks 7a-c as they move through the apparatus. In an embodiment, a product carrier 2 stays at a first position above one of the tanks 7a-c for a first unit of time, then moves to a second position above that tank 7a-c and remains at the second position for a second unit of time. The parts to be treated remain immersed in the liquid in the tank 7a-c during movement from the first position to the second position, so that treatment can essentially continue.

It is convenient to define a first direction *x* as a direction of movement of the product carriers 2a-d through the apparatus segment 1. This direction *x* is parallel to the longitudinal axes of the tracks 5a,b. A second direction *y* is transverse to the first direction in the plane of movement. A third direction z is transverse to the first and second directions *x,y.* With the system frame 3 in place on a supporting surface, the third direction *z* is parallel to the vertical. The dimensions of the apparatus segment 1 or at least the system segment are such that the segment fits into a standard intermodal container in assembled state, in the absence of the product carriers 2a-d. This imposes limits on the dimensions of the system segment or apparatus segment 1 in the first and second directions *x,y.*

Each product carrier 2 is supported on the tracks 5a,b such as to be positioned adjacent and between the tracks 5a,b. The product carrier 2 extends in the third direction *z* from below the level of the tracks 5a,b to above the level of the tracks 5a,b when in place on the tracks 5a,b. This is possible, because the system frame 3 leaves the area above a space 8 (Figs. 3 and 5) between the tracks 5a,b free of obstructions. Instead, the system frame 3 comprises at least two upright posts 9a-d at each of at least one location in the first direction x, on top of which a pair of cross-bars 10a-d are supported. Ends of the cross-bars 10a,b are spaced apart and located on either side of the space 8. Each cross-bar 10 of a pair supports one of the bars 4a,b defining a respective track 5a,b from below. Struts 11a,b (Fig. 4) are also provided below the level of the tracks 5a,b, i.e. below the level of the top of the bars 4a,b.

The system frame 3 supports a high-voltage live rail 12 and a low-voltage live rail 13 (Fig. 5). A power supply system (not shown in detail) maintains the low-voltage live rail 13 at an Extra Low Voltage, meaning a voltage below 50 V, e.g. 24 V. The high-voltage live rail 12 is arranged to supply electrical power at a higher voltage and to support currents necessary for electrolytic processing, in particular electroplating. The current may have a value up to 500 A.

The product carrier 2 comprises a barrel 14, a barrel holding frame 15 and a transporter 16.

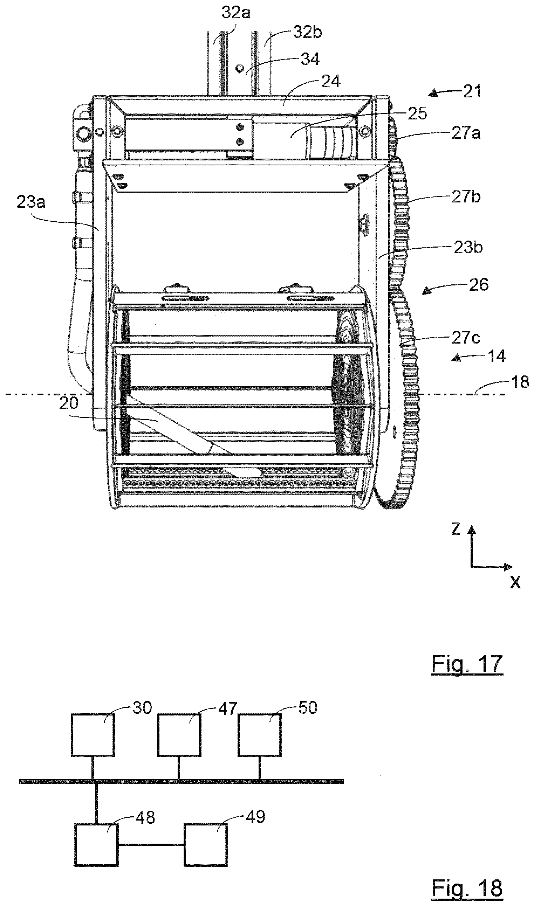

The barrel 14 forms a container of which the interior is arranged to accommodate the parts to be treated. The barrel 14 comprises opposing end walls 17a,b, located at opposite axial ends with respect to a barrel axis 18 (Fig. 17) corresponding to a body axis of the barrel 14. The barrel 14 further comprises a side wall 19, which may be generally cylindrical but need not be circle-cylindrical. Indeed, in the illustrated example, the barrel side wall 19 is comprised of panels. One or more of the panels of the barrel side wall 19 can be removed to insert and remove the parts to be treated.

The barrel side wall 19 comprises perforated panels rending the barrel side wall 19 pervious to liquid. When the barrel 14 is immersed in liquid in one of the tanks 7a-c, the liquid can flood the interior of the barrel 14 through the perforations. In the illustrated example, the barrel end walls 17a,b are impervious to liquid, but this is not essential.

A dangler electrode 20 (Fig. 17) extends into the barrel 14 for electrically contacting parts to be treated that are accommodated in the interior of the barrel 14.

The barrel axis 18 has an orientation that is approximately or exactly parallel to the first direction x, in use.

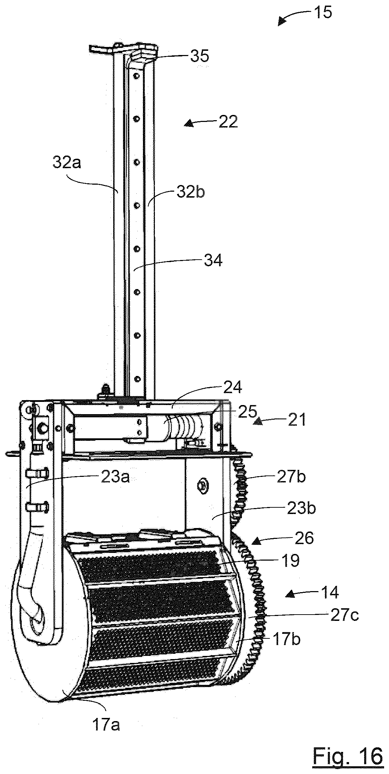

The barrel 14 is held by a barrel holding frame 15 comprising an, in use, lower frame section 21 and an upper frame section 22 (Figs. 16 and 17). The lower frame section 21 comprises two frame parts 23a,b, located at opposite axial ends of the barrel 14. The barrel 14 is held between the two frame parts 23a,b. An interconnecting frame part 24 interconnects the two frame parts 23a,b and connects them to the upper frame section 22. The extent of the upper frame section 22 in the first direction *x* is much smaller than that of the lower frame section 21.

In the illustrated embodiment, the barrel 14 is rotatably journalled to the frame parts 23a,b. The parts to be treated are loosely arranged in the interior of the barrel 14. Rotating the barrel 14 during treatment allows for a more uniform treatment of the parts, because tumbling the parts to be treated exposes different areas of these parts to the liquid.

In contrast to product carriers commonly used in plating apparatus, the barrel 14, although movable with respect to the barrel holding frame 15, is inseparable from the barrel holding frame 15. In turn, the barrel holding frame 15, although movable with respect to the transporter 16, is inseparable from the transporter 16. The product carrier 2 thus forms a unit. As a consequence, the product carrier 2 remains with the parts to be treated throughout the treatment process. This means that devices for receiving the barrel 14 are not required at the processing stations. The transporter 16 need not move back and forth to collect the barrel 14. In a synchronised method of processing, the unit of time can be smaller.

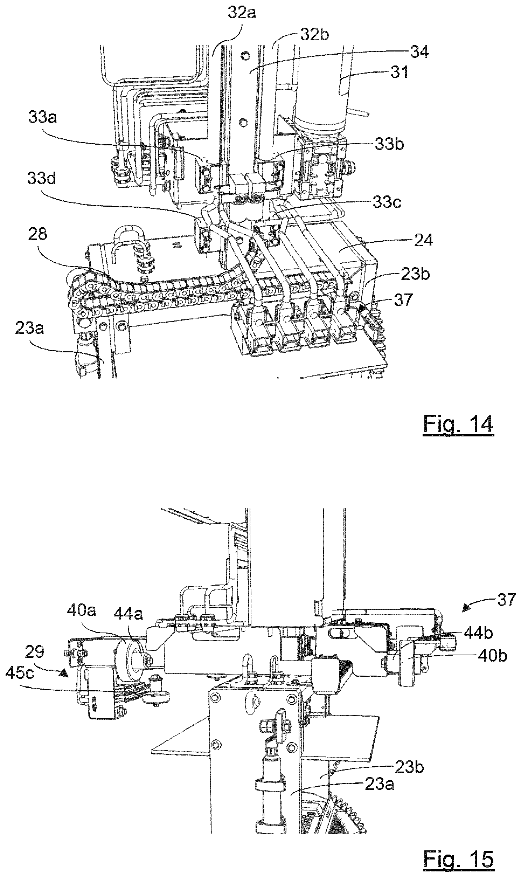

Drives for rotating the barrel 14 are not required at the processing station either. Instead, the barrel holding frame 15 has an electrical motor forming a barrel drive 25 (Figs. 16, 17) mounted thereto. The barrel drive 25 is connected to the barrel 14 via a gear train 26, in this case comprising three gear wheels 27a-c rotatably mounted to one of the frame parts 23a,b. The gear wheels 27a-c may be made of plastic or ceramic material, for example. The gear train 26 provides for separation in the third direction z between the barrel 14 and the barrel drive 25. A cable carrier 28 (Fig. 14) is arranged to protect one or more electrical cables for supplying power to the barrel drive 25. The power is obtained from the low-voltage live rail 13 via a first shoe assembly 29 supported by the transporter 16.

A controller 30 (Fig. 18) controls the operation of the barrel drive 25. The operation of the barrel drive 25 is controllable independently of other drives that the product carrier 2 comprises. In particular, the barrel 14 may be rotated whilst immersed in processing liquid, but also whilst suspended above one of the tanks 7a-c, in order to shake off processing liquid. The movement may be reciprocating movement. The term controller is used herein in a functional sense: such a controller will generally comprise at least one microprocessor and memory.

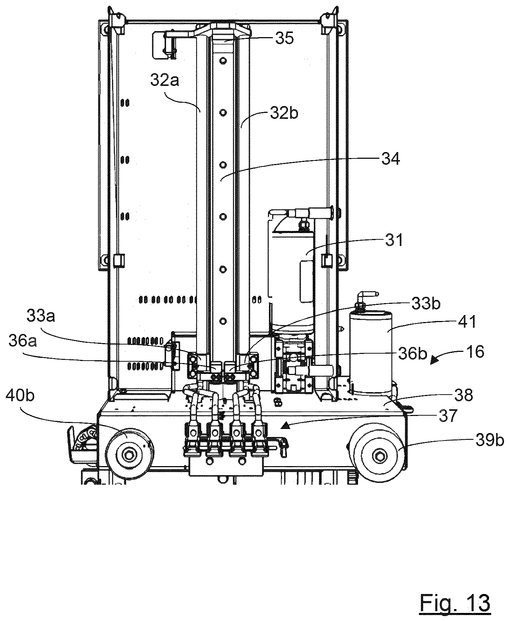

The tracks 5a,b are at one level in the third direction z within the system segment. So as not to have to provide devices at each processing station for raising and lowering the barrel 14, the product carrier 2 comprises a lifting drive 31 (Figs. 13, 14) for driving movement of the barrel 14 relative to the transporter 16 in the third direction z. In the illustrated embodiment, the barrel holding frame 15 is arranged to move with the barrel 14 in the third direction *z* and the opposite direction. In other embodiments, the barrel holding frame 15 may remain partly or completely stationary with respect to the transporter 16, with the barrel 14 moving with respect to the barrel holding frame 15. However, this alternative embodiment is more complicated. The illustrated embodiment also allows the product carrier 2 to clear obstacles such as walls of the tanks 7a-c more easily. Because the upper frame section 22 is relatively narrow, the upper frame section 22 can pass through the transporter 16 relatively easily. The lower frame section 21 remains below the transporter 16 at all times.

In the illustrated embodiment, the upper frame section 22 comprises a pair of guide shafts 32a,b that pass through linear bearings 33a-d (Fig. 14) fixedly mounted to the transporter 16. Two aligned linear bearings 33a-d are provided for each guide shaft 32a,b in the illustrated embodiment. The guide shafts 32a,b extend substantially in parallel to the third direction z.

A current-carrying bar 34 (Figs. 13, 14, 16, 17) extends between the guide shafts 32a,b. The current-carrying bar 34 is bent at an end distal to the barrel 14 to define a contact point 35 (Figs. 13, 16) . The current-carrying bar 34 is connected to the dangler electrode 20 at an end of the current-carrying bar 34 proximal to the barrel 14. When the barrel-holding frame 15 is in a position at an end of a range of movement at which the barrel 14 is furthest apart from the transporter 16, the contact point 35 makes electrical contact with electrical contacts 36a,b mounted on the transporter 16 to supply current to the dangler electrode 20. In other positions of the barrel-holding frame 15 the power supply to the dangler electrode 20 is consequently interrupted. The current-carrying bar 34 may be a solid structure made of electrically conductive material, e.g. copper or a copper alloy. Alternatively, the current-carrying bar 34 may comprise a shielding in which a conductor is provided, the shielding leaving only the contact point 35 exposed.

A second shoe assembly 37 is mounted on the transporter 16. The second shoe assembly 37 is arranged to contact the high-voltage live rail 12 and is electrically connected to the electrical contacts 36a,b mounted on the transporter 16.

The transporter 16 comprises a base 38 on which are mounted the various transporter components referred to above.

A pair of driven wheels 39a,b and a pair of further supporting wheels 40a,b are rotatably mounted to the transporter base 38. These four wheels 39a,b,40a,b are arranged to support the transporter 16, and thus the product carrier 2, on the tracks 5a,b. A first set of two wheels 39a,40a is supported on a first track 5a and a second set of two wheels 39b,40b is supported on a second track 5b. The transporter 16 extends between the first set and the second set, which sets are spaced apart in the second direction y. The upper frame section 22 of the barrel holding frame 15 is movable in the third direction *z* in between the first and the second sets of supporting wheels 39a,b,40a,b

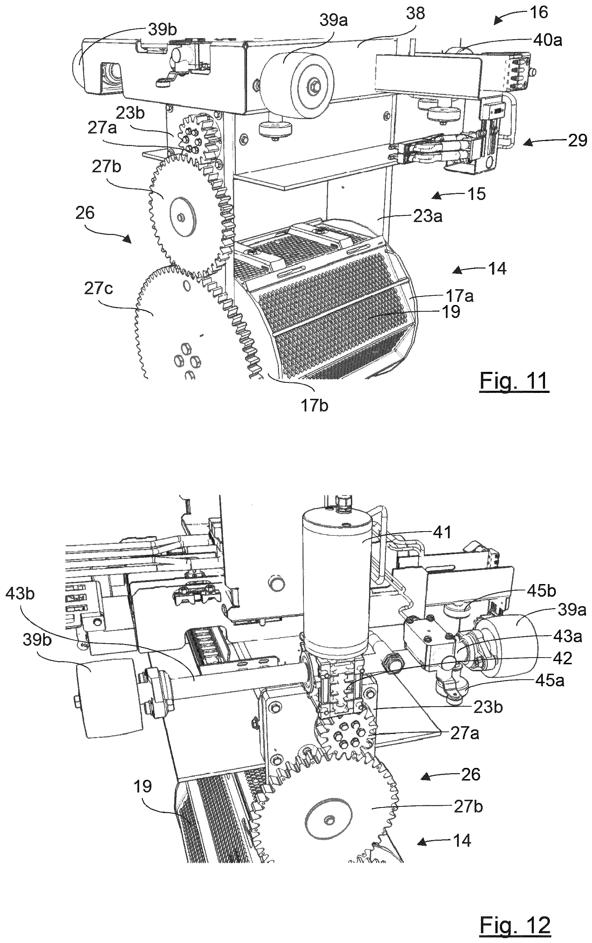

A transporter drive 41 comprises an electric motor coupled to a transmission 42 (Fig. 12) for driving drive axles 43a,b on which the driven wheels 39a,b are mounted. The controller 30 also controls the operation of the transporter drive 41.

The further supporting wheels 40a,b are arranged on axles 44a,b (Fig. 15) as well. The axes of rotation defined by the orientation of the axles 43a,b,44a,b extend essentially in the second direction y, transverse to the first direction x and lie in a common plane transverse to the third direction z.

Guide wheels 45a-c (Figs. 12, 15) are arranged to rotate about axes aligned or approximately aligned with the third direction z. These guide wheels 45a-c are arranged to contact respective opposite lateral surfaces of the bars 4a,b when the supporting wheels 39a,b,40a,b are positioned on the tracks 5a,b. In this manner, the product carrier 2 is positioned more accurately.

Thus, the wheels 39a,b,40a,b form runners arranged to support the product carrier 2 on at least one track 5a,b such as to allow the product carrier 2 to move in the first direction x, this direction being defined by the configuration, in particular the orientation, of the runners. The guide wheels 45a-c form runners arranged to guide movement of the product carrier 2 along the at least one track 5a,b in the first direction x. These support and guidance functions may be combined in alternative embodiments, e.g. in an embodiment employing sledges arranged to slide along a track instead of wheels.

The controller 30 and other electronic and electrical parts may be housed in a cabinet 46 situated above a level of the transporter base 38, for example.

The controller 30 is able to access a non-volatile data storage device 47 (Fig. 18) to retrieve instructions defining at least one of a route and a series of operations in the apparatus for wet-chemical processing of parts to be treated. These instructions may in particular identify the processing stations at which the product carrier 2 is to stop and immerse the barrel 14 in processing liquid. They may include a definition of the length of time for which the barrel 14 is to remain immersed. In an embodiment in which the treatment is synchronised, this time period may be defined in terms of a multiple of the unit of time used to synchronise the operation of the multiple product carriers 2a,b. The instructions may further define whether the barrel 14 is to be rotated when immersed and/or when in transit. Where multiple processing stations are defined for one tank 7a-c, the instructions may cause the product carrier 2 to move from a position associated with a first processing station to a position associated with a second, different processing station whilst keeping the barrel 14 immersed in the processing liquid contained in the tank 7a-c.

A sensor interface 48 to one or more sensor devices 49 is provided to enable the controller 30 to control operations or parts of operations autonomously, i.e. independently of a central control system of the apparatus for wet-chemical processing. Such sensors may include, for example, photoelectric sensors for detecting light emitted or reflected by beacons (not shown) positioned along the tracks 5a,b, magnetic sensors for detecting magnetic beacons (not shown) positioned along the tracks 5a,b, feelers deflected by beacons positioned along the tracks 5a,b, one or more motion sensors (accelerometers) or rotation sensors for implementing dead reckoning, etc.

In the illustrated embodiment, data can also be obtained through a network communication interface 50. This can include the data stored in the data storage device 47, thus allowing the product carrier 2 to be reprogrammed with a different series of operations and/or a different route. The data can also include control commands directly affecting the operation of one or more of the drives 25,31,41. Thus, it is also or alternatively possible to control the operation of the multiple product carriers 2a-d centrally. Furthermore, the product carrier 2 can communicate error messages to a central control system, for example. The same or a further network communication interface 50 can also or alternatively be used to enable the product carriers 2a-d to communicate amongst each other. This can be of use in avoiding collisions, for example.

The network communication interface 50 may in particular be a wireless network communication interface 50. The wireless network communication interface 50 may be in accordance with one or more of the IEEE 802.11 standards, for example.

Regardless of how movement of the product carrier 2 is controlled, this movement is in a direction aligned or approximately aligned with the barrel axis 18. The frame parts 23a,b therefore do not add to the extent of the product carrier 2 in the second direction y, that is to say the width of the product carrier 2. This in turn allows the tanks 7a-c, and therefore also the system frame 3, to be narrower. At least the system frame 3, potentially also a large part or all of the apparatus segment 1, can be pre-assembled and tested at a factory operated by the equipment supplier. Disassembly for shipping to the site where the apparatus will be deployed is not necessary, since the entire segment 1 or at least the system frame 3 is compact enough to fit into a standard intermodal container. The product carriers 2a-d can be shipped separately, so that the fact that they extend in the third direction *z* above the top of the tracks 5a,b, in use, does not matter for shipping purposes. Because the product carriers 2a-d are placed on top and move above the tanks 7a-c, the system frame 3 need not support the tracks 5a,b adjacent the tanks 7a-c. Furthermore, safety is improved, because the product carriers 2a-d will move above the level at which operating personnel is likely to be present. This saves on cages and other shielding measures.

The invention is not limited to the embodiment described above, which may be varied within the scope of the accompanying claims. For example, the high-voltage live rail 12 may be interrupted in sections where processing stations are defined that are not arranged for effecting electrolytic treatment of the parts to be treated. Operations that may be carried out in the apparatus for wet-processing included one or more of: (chemical) degreasing, electrolytic degreasing, rinsing, pickling, brightening and passivation, as well as electroplating to deposit, for example, a zinc or zinc alloy coating. The product carrier 2 may be provided with a central controller in addition to separate controllers for the transporter drive 41, barrel drive 25 and lifting drive 31, with the central controller controlling and co-ordinating between the separate controllers for the drives 25,31,41.

### List of reference numerals

| | | |
|---|---|---|
| 1 | - | apparatus segment |
| 2a-d | - | product carrier |
| 3 | - | system frame |
| 4a,b | - | bars |
| 5a,b | - | tracks |
| 6a-d | - | bar end faces |
| 7a-c | - | tanks |
| 8 | - | space between bars |
| 9a-d | - | upright posts |
| 10a-d | - | cross-bars |
| 11a,b | - | struts |
| 12 | - | high-voltage live rail |
| 13 | - | low-voltage live rail |
| 14 | - | barrel |
| 15 | - | barrel holding frame |
| 16 | - | transporter |
| 17a,b | - | barrel end walls |
| 18 | - | barrel axis |
| 19 | - | barrel side wall |
| 20 | - | dangler electrode |
| 21 | - | lower frame section |
| 22 | - | upper frame section |
| 23a,b | - | frame parts |
| 24 | - | interconnecting frame part |
| 25 | - | barrel drive |
| 26 | - | gear train |
| 27a-c | - | gear wheels |
| 28 | - | cable carrier |
| 29 | - | first shoe assembly |
| 30 | - | controller |
| 31 | - | lifting drive |
| 32a,b | - | guide shafts |
| 33a-d | - | linear bearings |
| 34 | - | current-carrying bar |
| 35 | - | contact point |
| 36a,b | - | electrical contacts |
| 37 | - | second shoe assembly |
| 38 | - | transporter base |
| 39a,b | - | driven wheels |
| 40a,b | - | further supporting wheels |
| 41 | - | transporter drive |
| 42 | - | transmission |
| 43a,b | - | drive axles |
| 44a,b | - | further supporting wheel axles |
| 45a-c | - | guide wheels |
| 46 | - | cabinet |
| 47 | - | data storage device |
| 48 | - | sensor interface |
| 49 | - | sensor device |
| 50 | - | network communication interface |

## Claims

1. Device for transporting a plurality of parts to be treated through an apparatus for wet-chemical treatment, the device comprising:
a transporter (16), comprising at least one runner (39a,b,40a,b) for supporting the transporter (16) for movement along at least one track (5a,b) in a first direction (x),
wherein at least part of the transporter (16) is located next to the runners (39a,b,40a,b), seen in a second direction (y) transverse to the first direction (x), and
wherein this part extends from a level below the runners (39a,b,40a,b) to a level above the runners (39a,b,40a,b) in a third direction (z) transverse to the first and second directions (*x*,*y*);
a container (14) having an interior for accommodating the plurality of parts; and
a frame (15), at least indirectly connecting the container (14) to the transporter (16) to allow the transporter (16) to carry the container (14) at a level below the runners (39a,b,40a,b), wherein the frame (15) comprises a respective frame part (23a,b) at at least one of opposite axial ends of the container (14) with respect to an axis (18) of the container (14),
wherein the container (14) is liquid-pervious between the axial ends to allow liquid to flood the interior when the container (14) is immersed in the liquid,
wherein the axis (18) of the container (14) extends in a direction (*x*) transverse to the second and third directions (*y*,*z*),
**characterised by**
comprising a mechanism (32a,b,33a-d) for guiding movement of at least one of the frame (15) and the container (14) in the third direction (z) relative to the transporter (16),
wherein the mechanism comprises at least one elongate part (32a,b) of the frame (15) and at least one respective bearing (33a-d) for guiding movement of the elongate part of the frame (15) through or next to the transporter (16).

2. Device according to claim 1,
wherein the runners (39a,b,40a,b) comprise at least one first runner (39a,40a) and at least one second runner (39b,40b),
wherein the first runners (39a,40a) and second runners (39b,40b) are arranged for movingly supporting the transporter (16) along first tracks (5a) and second tracks (5b), respectively, and
wherein the first runners (39a,40a) are positioned at a distance in the second direction (y) to the second runners (39b,40b).

3. Device according to claim 1 or 2, comprising at least one drive (25,31,41) and at least one controller (30) for controlling operation of at least one of the at least one drives (25,31,41).

4. Device according to claim 3, comprising a data storage device (47) for storing instructions defining a series of operations effected by operating at least one of the at least one drives (25,31,41) at at least one processing station in the apparatus for wet-chemical treatment, wherein at least one of the at least one controllers (30) is arranged to access the data storage device (47) to obtain and give effect to the instructions.

5. Device according to any one of the preceding claims, further comprising at least one contact shoe assembly (29) for contacting a live rail (13) extending along at least one of the tracks (5a,b).

6. Device according to any one of the preceding claims,
wherein the frame (15) is provided with at least one first electrical contact (35) at a distal position with respect to the container (14), seen in the third direction (z), and with a conductor (34) from the first electrical contact (35) to at least one electrode (20) arranged within the container (14),
wherein the first electrical contact (35) is positioned to move towards the transporter (16) when the container (14) moves away from the transporter (16), and
wherein the transporter (16) is provided with a second electrical contact (36a,b), arranged to contact the first electrical contact (35) at a limit of movement of the container (14) away from the transporter (16).

7. Device according to any one of the preceding claims, wherein the container (14) is a barrel journalled to the frame (15) for rotation about the axis (18).

8. Device according to claim 7, further comprising at least one transmission mechanism (26), e.g. a gear train, for transmitting rotary movement from a barrel drive (25) to the container (14).

9. Device according to claim 8, further comprising the barrel drive (25).

10. Device according to any one of the preceding claims, wherein the device further comprises a drive for driving the device in the first direction and/or a mechanism for guiding movement of at least one of the frame and the container in the third direction relative to the transporter and a drive for driving the movement in at least one of the third direction and a direction opposite to the third direction, the barrel drive is independent of the other drives.

11. System for transporting a plurality of parts to be treated through an apparatus for wet-chemical treatment, comprising:
a frame (3) supporting at least one track (5a,b); and
at least one device (2a-d) according to any one of the preceding claims.

12. System according to claim 11,
wherein each track (5a,b) is provided by an elongate bar (4a,b),
wherein the frame (3) comprises at least one upright post (9a-d), each arranged to support at least one of the bars (4a,b), and
wherein connections between the bars (4a,b) and the upright posts (9a-d) are completely below a level of a top of the bar (4a,b).

13. Apparatus for wet-chemical treatment of a plurality of parts, including at least one tank (7a-c) for forming a bath, and a system according to claim 11 or 12 for transporting the plurality of parts through the apparatus.

14. Method of transporting a plurality of parts to be treated through an apparatus for wet-chemical treatment, wherein the plurality of parts are accommodated in a container (14) of a device (2a-d) according to any one of claims 1-10 and the device (2a-d) is moved on the at least one track (5a,b) through the apparatus.

15. Method according to claim 14 wherein each of the devices is provided with at least one drive for driving at least one of the device and a component of the device and at least one controller for controlling at least one of the drives further comprises providing instructions to the controller during movement of the device through the apparatus.

## Patentansprüche

1. Vorrichtung zum Transportieren einer Vielzahl zu behandelnder Teile durch eine Einrichtung für nasschemische Behandlung, die Vorrichtung umfassend:
einen Transporter (16), umfassend mindestens eine Rolle (39a,b,40a,b) zum Stützen des Transporters (16) für eine Bewegung entlang mindestens einer Bahn (5a,b) in eine erste Richtung (x),
wobei sich mindestens ein Teil des Transporters (16), gesehen in einer zweiten Richtung (y) quer zu der ersten Richtung (x), neben den Rollen (39a,b,40a,b) befindet, und
wobei sich dieser Teil von einer Ebene unterhalb der Rollen (39a,b,40a,b) zu einer Ebene oberhalb der Rollen (39a,b,40a,b) in eine dritte Richtung (z) quer zu der ersten und der zweiten Richtung (*x*,*y*) erstreckt;
einen Behälter (14), der ein Inneres zum Aufnehmen der Vielzahl von Teilen aufweist; und
einen Rahmen (15), der den Behälter (14) mit dem Transporter (16) mindestens indirekt verbindet, um dem Transporter (16) zu ermöglichen, den Behälter (14) auf einer Ebene unterhalb der Rollen (39a,b,40a,b) zu tragen, wobei der Rahmen (15) einen jeweiligen Rahmenteil (23a,b) an mindestens einem von gegenüberliegenden axialen Enden des Behälters (14) hinsichtlich einer Achse (18) des Behälters (14) umfasst,
wobei der Behälter (14) zwischen den axialen Enden flüssigkeitsdurchlässig ist, um Flüssigkeit zu ermöglichen, das Innere zu fluten, wenn der Behälter (14) in die Flüssigkeit eingetaucht ist,
wobei sich die Achse (18) des Behälters (14) in eine Richtung (*x*) quer zu der zweiten und dritten Richtung (y,z) erstreckt,
**gekennzeichnet durch**
umfassend einen Mechanismus (32a,b,33a-d) zum Führen der Bewegung mindestens eines des Rahmens (15) und des Behälters (14) in die dritte Richtung (z) relativ zu dem Transporter (16),
wobei der Mechanismus mindestens einen länglichen Teil (32a, b) des Rahmens (15) und mindestens ein jeweiliges Lager (33a-d) zum Führen der Bewegung des länglichen Teils des Rahmens (15) durch den Transporter (16) oder neben diesem umfasst.

2. Vorrichtung nach Anspruch 1,
wobei die Rollen (39a,b,40a,b) mindestens eine erste Rolle (39a,40a) und mindestens eine zweite Rolle (39b,40b) umfassen,
wobei die ersten Rollen (39a, 40a) und die zweiten Rollen (39b, 40b) zum bewegend Stützen des Transporters (16) entlang erster Bahnen (5a) beziehungsweise zweiter Bahnen (5b) angeordnet sind, und
wobei die ersten Rollen (39a,40a) in einem Abstand in der zweiten Richtung (y) zu den zweiten Rollen (39b,40b) positioniert sind.

3. Vorrichtung nach Anspruch 1 oder 2, umfassend mindestens einen Antrieb (25,31,41) und mindestens einen Controller (30) zum Steuern eines Betriebs mindestens eines des mindestens einen Antriebs (25,31,41).

4. Vorrichtung nach Anspruch 3, umfassend eine Datenspeichervorrichtung (47) zum Speichern von Anweisungen, die eine Reihe von Vorgängen, die durch Betreiben mindestens eines des mindestens einen Antriebs (25,31,41) an mindestens einer Verarbeitungsstation in der Einrichtung für nasschemische Behandlung ausgeführt werden, definieren, wobei mindestens einer des mindestens einen Controllers (30) angeordnet ist, um auf die Datenspeichervorrichtung (47) zuzugreifen, um die Anweisungen zu erhalten und umzusetzen.

5. Vorrichtung nach einem der vorstehenden Ansprüche, ferner umfassend mindestens eine Stromabnehmerschuhbaugruppe (29) zum Kontaktieren einer Stromschiene (13), die sich entlang mindestens einer der Bahnen (5a,b) erstreckt.

6. Vorrichtung nach einem der vorstehenden Ansprüche,
wobei der Rahmen (15) mit mindestens einem ersten elektrischen Kontakt (35) an einer distalen Position hinsichtlich des Behälters (14), gesehen in der dritten Richtung (z), und mit einem Leiter (34) von dem ersten elektrischen Kontakt (35) zu mindestens einer Elektrode (20), angeordnet innerhalb des Behälters (14), versehen ist,
wobei der erste elektrische Kontakt (35) positioniert ist, um sich zu dem Transporter (16) zu bewegen, wenn sich der Behälter (14) von dem Transporter (16) wegbewegt, und
wobei der Transporter (16) mit einem zweiten elektrischen Kontakt (36a,b), der angeordnet ist, um den ersten elektrischen Kontakt (35) an einer Bewegungsgrenze des Behälters (14) weg von dem Transporter (16) zu kontaktieren, versehen ist.

7. Vorrichtung nach einem der vorstehenden Ansprüche, wobei der Behälter (14) eine Trommel ist, die für eine Drehung um die Achse (18) an dem Rahmen (15) gelagert ist.

8. Vorrichtung nach Anspruch 7, ferner umfassend mindestens einen Übertragungsmechanismus (26), z.B. ein Getriebe, zum Übertragen einer Drehbewegung von einem Trommelantrieb (25) auf den Behälter (14).

9. Vorrichtung nach Anspruch 8, ferner umfassend den Trommelantrieb (25).

10. Vorrichtung nach einem der vorstehenden Ansprüche, wobei die Vorrichtung ferner einen Antrieb zum Antreiben der Vorrichtung in die erste Richtung und/oder einen Mechanismus zum Führen der Bewegung mindestens eines des Rahmens und des Behälters in die dritte Richtung relativ zu dem Transporter und einen Antrieb zum Antreiben der Bewegung in mindestens eine der dritten Richtung und eine der dritten Richtung entgegengesetzten Richtung umfasst, wobei der Trommelantrieb von den anderen Antrieben unabhängig ist.

11. System zum Transportieren einer Vielzahl zu behandelnder Teile durch eine Einrichtung für nasschemische Behandlung, umfassend:
einen Rahmen (3), der mindestens eine Bahn (5a,b) stützt; und
mindestens eine Vorrichtung (2a-d) nach einem der vorstehenden Ansprüche.

12. System nach Anspruch 11,
wobei jede Bahn (5a,b) durch eine längliche Stange (4a,b) bereitgestellt ist,
wobei der Rahmen (3) mindestens einen aufrechten Pfosten (9a-d) umfasst, von denen jeder angeordnet ist, um mindestens eine der Stangen (4a,b) zu stützen, und
wobei Verbindungen zwischen den Stangen (4a, b) und den aufrechten Pfosten (9a-d) vollständig unterhalb einer Ebene einer Oberseite der Stange (4a, b) liegen.

13. Einrichtung für nasschemische Behandlung einer Vielzahl von Teilen, einschließlich mindestens eines Tanks (7a-c) zum Ausbilden eines Bades, und eines Systems nach Anspruch 11 oder 12 zum Transportieren der Vielzahl von Teilen durch die Einrichtung.

14. Verfahren zum Transportieren einer Vielzahl von zu behandelnden Teilen durch eine Einrichtung für nasschemische Behandlung, wobei die Vielzahl von Teilen in einem Behälter (14) einer Vorrichtung (2a-d) nach einem der Ansprüche 1 bis 10 aufgenommen werden und die Vorrichtung (2a-d) auf der mindestens einen Bahn (5a,b) durch die Einrichtung bewegt wird.

15. Verfahren nach Anspruch 14, wobei jede der Vorrichtungen mit mindestens einem Antrieb zum Antreiben mindestens einer der Vorrichtung und einer Komponente der Vorrichtung versehen ist und mindestens ein Controller zum Steuern mindestens eines der Antriebe ferner Bereitstellen von Anweisungen an den Controller während der Bewegung der Vorrichtung durch die Einrichtung umfasst.

## Revendications

1. Dispositif de transport d'une pluralité de pièces à traiter à travers un appareil de traitement chimique en milieu humide, le dispositif comprenant :
un transporteur (16), comprenant au moins un patin (39a, b, 40a, b) destiné à soutenir le transporteur (16) pour un déplacement le long d'au moins un rail (5a, b) dans une première direction (x),
dans lequel au moins une partie du transporteur (16) est située à côté des patins (39a, b, 40a, b), vu dans une deuxième direction (y) transversale à la première direction (x), et
dans lequel cette partie s'étend à partir d'un niveau au-dessous des patins (39a, b, 40a, b) vers un niveau au-dessus des patins (39a, b, 40a, b) dans une troisième direction (z) transversale aux première et deuxième directions (*x*, *y*) ;
un récipient (14) ayant un intérieur destiné à loger la pluralité de pièces ; et
un cadre (15), reliant au moins indirectement le récipient (14) au transporteur (16) afin de permettre au transporteur (16) de transporter le récipient (14) à un niveau au-dessous des patins (39a, b, 40a, b), dans lequel le cadre (15) comprend une partie de cadre (23a, b) respective au niveau d'au moins l'une des extrémités axiales opposées du récipient (14) par rapport à un axe (18) du récipient (14),
dans lequel le récipient (14) est perméable au liquide entre les extrémités axiales afin de permettre à un liquide d'inonder l'intérieur lorsque le récipient (14) est immergé dans le liquide,
dans lequel l'axe (18) du récipient (14) s'étend dans une direction (*x*) transversale aux deuxième et troisième directions (y, z),
**caractérisé par**
comprenant un mécanisme (32a, b, 33a-d) destiné à guider un déplacement d'au moins l'un du cadre (15) et du récipient (14) dans la troisième direction (z) par rapport au transporteur (16),
dans lequel le mécanisme comprend au moins une partie allongée (32a, b) du cadre (15) et au moins un roulement (33a-d) respectif destiné à guider un déplacement de la partie allongée du cadre (15) à travers ou à côté du transporteur (16).

2. Dispositif selon la revendication 1,
dans lequel les patins (39a, b, 40a, b) comprennent au moins un premier patin (39a, 40a) et au moins un second patin (39b, 40b),
dans lequel les premiers patins (39a, 40a) et les seconds patins (39b, 40b) sont disposés de sorte à soutenir de manière déplaçable le transporteur (16) le long de premiers rails (5a) et de seconds rails (5b), respectivement, et
dans lequel les premiers patins (39a, 40a) sont positionnés à une distance dans la seconde direction (y) des seconds patins (39b, 40b).

3. Dispositif selon la revendication 1 ou 2, comprenant au moins un entraînement (25, 31, 41) et au moins un dispositif de commande (30) destiné à commander une opération d'au moins l'un de l'au moins un entraînement (25, 31, 41).

4. Dispositif selon la revendication 3, comprenant un dispositif de stockage de données (47) destiné à stocker des instructions définissant une série d'opérations effectuées en faisant fonctionner au moins l'un de l'au moins un entraînement (25, 31, 41) au niveau d'au moins un poste de traitement dans l'appareil de traitement chimique en milieu humide, dans lequel au moins l'un de l'au moins un dispositif de commande (30) est disposé de sorte à accéder au dispositif de stockage de données (47) afin d'obtenir et de donner effet aux instructions.

5. Dispositif selon l'une quelconque des revendications précédentes, comprenant en outre au moins un ensemble flotteur de contact (29) destiné à entrer en contact avec un rail conducteur (13) s'étendant le long d'au moins l'un des rails (5a, b).

6. Dispositif selon l'une quelconque des revendications précédentes,
dans lequel le cadre (15) est pourvu d'au moins un premier contact électrique (35) au niveau d'une position distale par rapport au récipient (14), vu dans la troisième direction (z), et d'un conducteur (34) à partir du premier contact électrique (35) à au moins une électrode (20) disposée à l'intérieur du récipient (14),
dans lequel le premier contact électrique (35) est positionné de sorte à se déplacer vers le transporteur (16) lorsque le récipient (14) se déplace loin du transporteur (16), et
dans lequel le transporteur (16) est pourvu d'un second contact électrique (36a, b), disposé de sorte à entrer en contact avec le premier contact électrique (35) au niveau d'une limite de déplacement du récipient (14) loin du transporteur (16).

7. Dispositif selon l'une quelconque des revendications précédentes, dans lequel le récipient (14) est un tambour tourillonné sur le cadre (15) pour une rotation autour de l'axe (18).

8. Dispositif selon la revendication 7, comprenant en outre au moins un mécanisme de transmission (26), par exemple un train d'engrenages, destiné à transmettre un déplacement de rotation à partir d'un entraînement (25) à tambour au récipient (14).

9. Dispositif selon la revendication 8, comprenant en outre l'entraînement (25) à tambour.

10. Dispositif selon l'une quelconque des revendications précédentes, dans lequel le dispositif comprend en outre un entraînement destiné à entraîner le dispositif dans la première direction et/ou un mécanisme destiné à guider un déplacement d'au moins l'un du cadre et du récipient dans la troisième direction par rapport au transporteur et un entraînement destiné à entraîner le déplacement dans au moins l'une de la troisième direction et d'une direction opposée à la troisième direction, l'entraînement à tambour est indépendant des autres entraînements.

11. Système de transport d'une pluralité de pièces à traiter à travers un appareil de traitement chimique en milieu humide, comprenant :
un cadre (3) soutenant au moins un rail (5a, b) ; et
au moins un dispositif (2a-d) selon l'une quelconque des revendications précédentes.

12. Système selon la revendication 11,
dans lequel chaque rail (5a, b) est fourni par une barre (4a, b) allongée,
dans lequel le cadre (3) comprend au moins un poteau vertical (9a-d), chacun disposé de sorte à soutenir au moins l'une des barres (4a, b), et
dans lequel des liaisons entre les barres (4a, b) et les poteaux verticaux (9a-d) sont complètement au-dessous d'un niveau d'un sommet de la barre (4a, b).

13. Appareil de traitement chimique en milieu humide d'une pluralité de pièces, comportant au moins une cuve (7a-c) destinée à former un bain, et un système selon la revendication 11 ou 12 destiné à transporter la pluralité de pièces à travers l'appareil.

14. Procédé de transport d'une pluralité de pièces à traiter à travers un appareil de traitement chimique en milieu humide, dans lequel la pluralité de pièces sont logées dans un récipient (14) d'un dispositif (2a-d) selon l'une quelconque des revendications 1 à 10 et le dispositif (2a-d) est déplacé sur l'au moins un rail (5a, b) à travers l'appareil.

15. Procédé selon la revendication 14, dans lequel chacun des dispositifs est pourvu d'au moins un entraînement destiné à entraîner au moins l'un du dispositif et d'un composant du dispositif et au moins un dispositif de commande destiné à commander au moins l'un des entraînements comprend en outre la fourniture d'instructions au dispositif de commande pendant un déplacement du dispositif à travers l'appareil.
